Europäisches Patentamt

European Patent Office

Office européen des brevets

(11) Veröffentlichungsnummer: **0 503 273 A2**

## EUROPÄISCHE PATENTANMELDUNG

(21) Anmeldenummer: **92102037.6**

(22) Anmeldetag: **07.02.92**

(51) Int. Cl.⁵: **H02K 7/102**, H02K 7/12, H02P 3/04

(30) Priorität: **05.03.91 DE 4106914**

(43) Veröffentlichungstag der Anmeldung:
**16.09.92 Patentblatt 92/38**

(84) Benannte Vertragsstaaten:
**AT DE FR**

(71) Anmelder: **Licentia Patent-Verwaltungs-GmbH**
**Theodor-Stern-Kai 1**
**W-6000 Frankfurt/Main 70(DE)**

(72) Erfinder: **Hauke, Dieter**
**Moorbäksweg 7**
**W-2906 Wardenburg(DE)**
Erfinder: **Patzelt, Siegfried**
**Dwaschweg 43**
**W-2900 Oldenburg(DE)**

(74) Vertreter: **Vogl, Leo, Dipl.-Ing.**
**Licentia Patent-Verwaltungs-G.m.b.H.**
**Theodor-Stern-Kai 1**
**W-6000 Frankfurt 70(DE)**

(54) Elekfromotor mit beim Abschalten des Motors selbsttätig wirkender Bremse.

(57) Bei bekannten Elektromotoren mit beim Abschalten des Motors selbsttätig wirkender Bremse ist der Bremsanker unmittelbar an einem axial auf der Welle geführten, mit dem Läufer drehbaren Bremselement befestigt, das gegen eine axial verschiebbare Bremsscheibe preßbar ist. Das drehbare Bremselement weist zur Drehebene geneigte erste Keilflächen auf, die beim Eingriff der Bremse an zweiten, geneigten Keilflächen des Läufers anliegen. Ein Wiedereinschalten des Motors während des Bremsvorgangs führt zu einem Blockieren des Motors, weil die miteinander korrespondierenden Schrägflächen des Bremselements und des Läufers ein Anziehen des Ankers und dadurch ein Lösen der Bremse verhindern. Mit der neuen Einrichtung wird dieser Nachteil beseitigt.

Der Bremsscheibe (16) ist ein am bremsseitigen Lagerschild (17) angeordneter Schalter (24) zugeordnet, der durch die Bremsscheibe (16) bei deren Axialverschiebung während des Bremsvorgangs in eine ein Wiedereinschalten des Motors verhindernde Schaltposition gebracht wird.

FIG.1

Die Erfindung bezieht sich auf einen Elektromotor gemäß dem Oberbegriff des Anspruchs 1.

Ein solcher Elektromotor ist Gegenstand der nicht vorveröffentlichten Patentanmeldung P 39 35 968.9-32.

Aufgabe der Erfindung ist es, ein Wiedereinschalten des Elektromotors während des Bremsvorgangs zu unterbinden, weil sonst die Keilwirkung der miteinander korrespondierenden Schrägflächen am Bremstopf und am Kurzschlußring ein Anziehen des Ankers bzw. Lösen der Bremse verhindern und der Motor demnach im Blockierzustand verharren würde.

Diese Aufgabe ist erfindungsgemäß mit den Merkmalen im kennzeichnenden Teil des Anspruchs 1 gelöst.

Weiterbildungen und zweckmäßige Ausgestaltungen der Erfindung sind in den Unteransprüchen angegeben.

Die Erfindung wird im nachstehenden anhand der Zeichnung, die ein Ausführungsbeispiel schematisch veranschaulicht, erläutert.

Es zeigen:

Fig. 1    einen Teil-Längsschnitt durch einen Asynchronmotor mit automatisch wirkender Bremse,

Fig. 2    eine Ansicht entlang des Schnittes A-A durch Fig. 1.

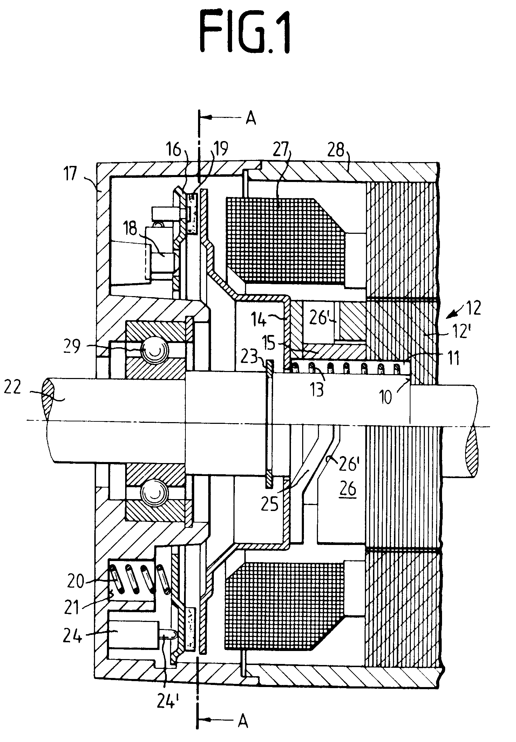

Wie aus Figur 1 ersichtlich ist, stützt sich am Grund 10 einer Ausdrehung 11 im Blechpaket 12' des Kurzschlußläufers 12 eine Schraubenfeder 13 ab, die mit ihrem anderen Ende auf einen Bremstopf 14 einwirkt, mit dem ein Magnetanker 15 fest verbunden ist, der beim Normalbetrieb des Motors an der Stirnseite des Läuferblechpakets 12 anliegt.

Dem Bremstopf 14 mit dem Magnetanker 15 ist einer Bremsscheibe 16 zugeordnet, die im Lagerschild 17 gehalten und mittels Stifte 18 geführt und gegen Verdrehung gesichert ist. Die Bremsscheibe 16 ist nach Art eines Bajonettverschlusses im Lagerschild 17 montiert, axial verschiebbar und mit einem Bremsbelag oder mehreren Bremsbelägen 19 versehen. Die Bremsbeläge können gegebenenfalls auch am Bremstopf angebracht sein. Aus Unwuchtgründen ist es jedoch meist zweckmäßiger, die Bremsbeläge an der feststehenden Bremsscheibe zu befestigen. Um ein Blockieren der Bremse zu vermeiden, sind der Bremsscheibe 16 Federn 20 zugeordnet, deren andere Enden sich am Boden von im Lagerschild 17 angebrachten Bohrungen 21 abstützen und welche ein Nachgeben der Bremsscheibe in axialer Richtung ermöglichen. Der Verschiebeweg der Bremsscheibe 16 ist durch einen auf der Motorwelle 22 angebrachten Anschlagring 23 begrenzt. Die Motorwelle 22 ist im bremsseitigen Lagerschild 17 mittels eines Kugellagers 29 drehbar gelagert.

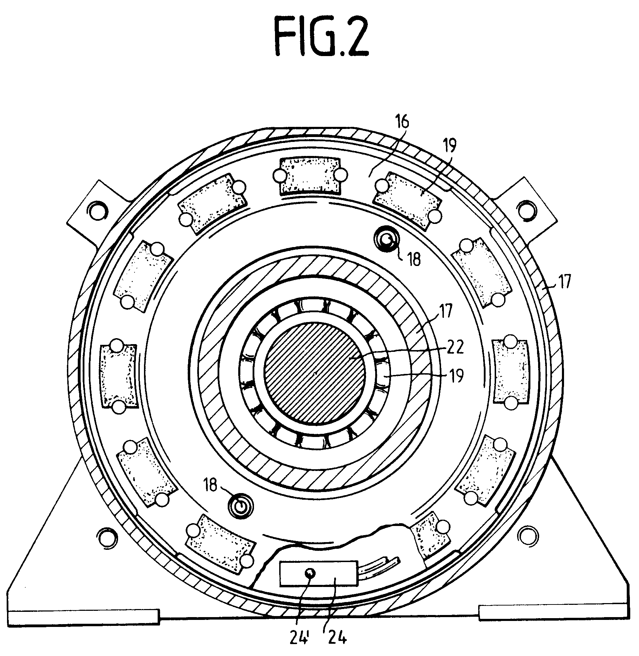

Im unteren Bereich und an der Innenseite des Lagerschilds 17 ist, wie auch Figur 2 erkennen läßt, ein beim Ausführungsbeispiel als Schnappschalter ausgebildeter Schalter 24 angebracht. Auf das Betätigungsglied 24' des Schalters 24 wirkt während des Bremsvorgangs die Bremsscheibe 16 ein, wodurch der Schalter 24 in eine Schaltposition gelangt, die ein Wiedereinschalten des Motors während des Bremsvorgangs ausschließt.

Dies kann in der Weise geschehen, daß der Schalter 24 in der Bremslage der Bremsscheibe 16 den Steuerstromkreis des Schaltschützes für das Zu- und Abschalten des Motors unterbricht, beispielsweise den Stromkreis der bzw. einer Relaisspule. Es besteht auch die Möglichkeit, einen Schalter zu verwenden, der berührungslos ausgelöst wird, z.B. induktiv oder magnetisch.

Außer dem Magnetanker 15 ist am Bremstopf 14 eine Keilscheibe 25 angebracht, die mit den Schrägflächen 26' im Kurzschlußring 26 des Läufers 12 in bekannter Weise zusammenwirkt.

Der Bremstopf 14 mit dem Magnetanker 15 und der Keilscheibe 25 ist dem Konturenverlauf des Wickelkopfes 27 der Statorwicklung angepaßt. Der bremsseitige Lagerschild 17 ist in üblicher Weise in das Motorgehäuse 28 eingepaßt und mit diesem vereinigt.

**Patentansprüche**

1.   Elektromotor mit beim Abschalten des Motors selbsttätig wirkender Bremse, welche einen ferromagnetischen, die Motorwelle zwischen Läuferblechpaket und Lagerschild umgebenden, vom in den Läufer eindringenden magnetischen Fluß des Motors axial entgegen einer Federkraft an den Läufer anziehbaren Anker aufweist, wobei der Anker unmittelbar an einem axial auf der Welle geführten, mit dem Läufer drehbaren Bremselement befestigt ist, welches gegen eine unverdrehbare, gegen eine Rückstellkraft axial relativ zum bremsseitigen Lagerschild verschiebbare Bremsscheibe preßbar ist, und wobei das drehbare Bremselement um einen durch Anschläge begrenzten Drehwinkel gegenüber dem Läufer drehbar ist und zur Drehebene geneigte erste Keilflächen aufweist, welche beim Eingriff der Bremse an zugeordneten geneigten zweiten Keilflächen des Läufers anliegen, durch welche Flächen die Anschläge gebildet sind, dadurch gekennzeichnet, daß der Bremsscheibe (16) ein am bremsseitigen Lagerschild (17) angeordneter Schalter (24 ) zugeordnet ist, der durch die Bremsscheibe (16) bei deren Axialverschiebung während des Bremsvorgangs in eine ein Wiedereinschalten des Motors verhindernde Schaltposition gebracht wird.

2. Elektromotor nach Anspruch 1, dadurch gekennzeichnet, daß der Schalter (24) als mit einem Betätigungsglied (24') versehener Schnappschalter ausgebildet ist, wobei die Bremsscheibe (16) unmittelbar auf das Betätigungsglied (24') einwirkt.

3. Elektromotor nach Anspruch 1, dadurch gekennzeichnet, daß der Schalter (24) durch die Bremsscheibe (16) berührungslos geschaltet wird.

4. Elektromotor nach einem der vorhergehenden Ansprüche, dadurch gekennzeichnet, daß der Schalter (24) im Steuerstromkreis für den Motorschalter angeordnet ist.

5. Elektromotor nach einem der vorhergehenden Ansprüche, dadurch gekennzeichnet, daß die Bremsscheibe (16) nach Art eines Bajonettverschlusses mit dem Lagerschild (17) vereinigt.

# FIG.1

# FIG.2